# EUROPÄISCHE PATENTSCHRIFT

(11) **EP 1 205 355 B1**
(45) Veröffentlichungstag und Bekanntmachung des Hinweises auf die Patenterteilung: **02.02.2005**
(21) Anmeldenummer: 01250399.1
(22) Anmeldetag: 13.11.2001
(51) Int. Cl.: B60R 7/04, B64D 11/00, B61D 37/00, B65D 6/18, B60R 5/04

(54) **Klappbehältereinrichtung**
Collapsible container device
Dispositif de récipient pliable

(30) Priorität: 13.11.2000 DE 20019462 U
(43) Veröffentlichungstag der Anmeldung: 15.05.2002
(73) Patentinhaber: Faurecia Innenraum Systeme GmbH, 76767 Hagenbach (DE)
(72) Erfinder: Klusmann, Rainer, 34233 Fuldatal (DE); Krauleidis, Oliver, 36205 Sontra (DE); Bürkle, Thomas, 65203 Wiesbaden (DE); Schwarz, Werner, 76865 Insheim (DE); Nick, Albrecht, 38550 Isenbühl (DE)
(74) Vertreter: Pfenning, Meinig & Partner

(56) Entgegenhaltungen:
- DE-A- 4 340 675
- DE-A- 19 820 511
- DE-U- 7 112 747
- US-A- 2 214 575
- US-A- 6 026 646
- PATENT ABSTRACTS OF JAPAN vol. 1996, no. 04, 30. April 1996 (1996-04-30) -& JP 07 315130 A (KANTO AUTO WORKS LTD), 5. Dezember 1995 (1995-12-05)

## Beschreibung

Die vorliegende Erfindung betrifft eine Klappbehältereinrichtung nach Anspruch 1.

Die Beladung von Verkehrsmitteln wie Kraftfahrzeugen, Eisenbahnen, Flugzeugen oder dergleichen stellt sich in mehrfacher Hinsicht problematisch dar. Aufgrund der Bewegung des Verkehrsmittels ist es vorteilhaft, Frachtgut innerhalb des Laderaumes in standfeste Behälter zu füllen, so daß ein fester Halt des Frachtgutes gewährleistet ist und dieses sich nicht ungewollt innerhalb des Laderaumes verschiebt. Andererseits sollen diese Behältnisse zur Aufnahme des Frachtgutes bei Fahrten ohne Frachtgut möglichst wenig Laderaum in Anspruch nehmen, um etwa Platz für zusätzliche Bestuhlung zu liefern. Dieses Problem stellt sich insbesondere bei Kleinbussen bzw. Minivans.

Es ist bekannt, insbesondere in Kraftfahrzeugen, sogenannte "Faltboxen" zum Transport von Frachtgut zu verwenden. Diese Faltboxen bestehen aus gelenkig miteinander verbundenen Kunststoffplatten, welche im zusammengeklappten Zustand im Wesentlichen die Form eines Brettes aufweisen und im ausgeklappten Zustand die Form eines an einer Deckfläche offenen Hohlquaders aufweisen.

Eine solche Faltbox, auch Faltbehälter genannt, hat jedoch den Nachteil, daß eine leere Faltbox bei üblichen Kraftfahrzeugen aufgrund unzureichender Haftkräfte bei Fahrt des Kraftfahrzeuges unkontrolliert im Laderaum umherrutscht. Eine gefüllte Faltbox, welche nicht fixiert ist, stellt bei plötzlichen Bremsmanövern eine Gefahr für die Fahrzeuginsassen dar.

Eine weitere Vorrichtung nach dem Stand der Technik sieht vor, eine Faltbox mit zusätzlichem Befestigungsmaterialien, wie etwa Gurten oder Gummibändern, im Laderaum zu fixieren. Solche Vorrichtungen sind jedoch umständlich zu handhaben, so daß im Alltagsgebrauch auf diese häufig verzichtet wird, wodurch sich die eingangs erwähnten Nachteile wieder einstellen.

Die gattungsbildende DE 198 37 278 A1 zeigt eine Klappbehältereinrichtung für ein Kraftfahrzeug. Diese weist eine im Kraftfahrzeuginnenraum gelagerte zweiteilige Klappe auf und zeigt außerdem einen Faltbehälter, wobei für die Klappe ein im wesentlichen zur Innenraumverkleidung (d.h. dem Boden des Laderaums) des Fahrzeugs bündiger Schließzustand sowie ein davon verschiedener Ausklappzustand einnehmbar ist. Der Faltbehälter ist zusammenklappbar und auf der im Schließzustand dem Verkehrsmittelinnenraum abgewandten Seite der Klappe untergebracht, wenn sich die Klappe im Schließzustand befindet. Nach Öffnen der Klappe ist der Faltbehälter durch mehrere Schwenkvorgänge zu einem im wesentlichen quaderförmigen Kasten ausklappbar.

Nachteilig an dieser gattungsgemäßen Klappbehältereinrichtung ist, daß insbesondere bei schweren Lasten, welche in dem Faltbehälter unterzubringen sind, eine Bedienperson aufgrund des notwendigen Vorbeugens in den Kraftfahrzeuginnenraum beim Be- und Entladen des Faltbehälters eine unbequeme bzw. ungesunde Haltung (insbesondere für die Wirbelsäule) einnehmen muß.

Der vorliegenden Erfindung liegt daher die Aufgabe zugrunde, eine Klappbehältereinrichtung zu schaffen, welche einerseits eine raumsparende und ästhetisch ansprechende Unterbringung eines Faltbehälters in einem Fahrzeuginnenraum bei dessen Nichtbenutzung gewährleistet und andererseits aber ein bequemes und ergonomisches Be- und Entladen des Faltbehälters ermöglicht.

Diese Aufgabe wird durch eine Klappbehältereinrichtung nach Anspruch 1 gelöst.

Dadurch, daß die im Schließzustand dem Verkehrsmittelinnenraum abgewandte Seite der Klappe eine Aufnahme für den Klappbehälter aufweist und die Klappe zum Schwenken der Klappe in den Ausklappzustand und anschließendem im wesentlichen erdbodenparallelen Schwenken der Klappe in zwei Schwenkrichtungen schwenkbar ist, wird diese Aufgabe gelöst.

Durch Schwenken in die erste Schwenkrichtung wird gewährleistet, daß die Klappe aus der zum Verkehrsmittelinnenraum bündigen Schließzustands-Lage in eine Lage ausgeklappt wird, in welcher sie z.B. parallel zum Laderaumboden ist (diese Lage wird mit "Ausklappzustand" beschrieben). Ein weiteres Schwenkgelenk ermöglicht es dann, die Klappe z.B. um die Hochachse des Verkehrsmittels zu drehen, d.h. quasi in der Ladebodenebene zu bewegen. Hiermit wird es möglich, z.B. bei ausgefaltetem Faltbehälter die Klappe bei geöffneten Türen eines Kleinbusses aus dem Fahrzeug heraus zu schwenken, so daß dieses leichter zu beladen ist. Hierzu sind die Schwenkgelenke so auszugestalten, daß die Tragkraft der Klappe erdbodenparallel (also in der Ladebodenebene) gewährleistet ist. Somit muß nicht mehr eine Bedienperson den Faltbehälter anheben, um eine Bewegung des Faltbehälters in der Ladebodenebene zu erreichen, sondern diese Aufgabe wird durch die Schwenkbarkeit der Klappe erreicht. Dies ist für Bedienpersonen bequem und nicht gesundheitsschädlich, egal, ob der Faltbehälter komplett von der Klappe getrennt oder lediglich dessen Inhalt entnommen wird.

Hierbei ist es außerdem möglich, eine Fixiervorrichtung vorzusehen, welche das Schwenkgelenk, welches die Drehung um die Hochachse ermöglicht (also die erdbodenparallele bzw. in Ladebodenebene mögliche Bewegung) sperrt, so daß es nicht zu ungewünschten Verdrehungen der Klappe mit darauf befindlichem gefüllten Faltbehälter im Transportbetrieb kommen kann.

Dabei hat eine erfindungsgemäße Klappbehältereinrichtung außerdem noch die Eigenschaft, daß bei zusammengefaltetem Faltbehälter die Klappe in ihrem Schließzustand den Faltbehälter vollkommen verdeckt und fixiert, so daß dieser nicht im Verkehrsmittelinnenraum umherrutschen und somit störende Geräusche oder einen unvorteilhaften ästhetischen Eindruck hinterlassen kann, bei Bremsmanövern geht keine Gefahr von ihm aus. Der zusammengefaltete Faltbehälter ist unsichtbar hinter der Innenraumverkleidung des Verkehrsmittels, mit welcher die Kappe im Schließzustand vorzugsweise, aber nicht notwendigerweise bündig abschließt, verschlossen. Beim Herausklappen der Klappe in einen Ausklappzustand, etwa in die waagerechte bzw. zum Laderaum des Fahrzeuges parallele Position, kann der Faltbehälter ausgefaltet werden, so daß er mit Frachtgut beladen werden kann. Hierbei ist er immer noch, vorzugsweise in Bewegungsrichtung parallel zum Laderaum, durch die Klappe fixiert, so daß ein Verrutschen des gefüllten Faltbehälters und somit eine Gefährdung von Fahrzeuginsassen auszuschließen ist.

Vorteilhafte Ausgestaltungen der vorliegenden Erfindung werden in den abhängigen Ansprüchen angegeben.

Eine besonders vorteilhafte Ausgestaltung sieht vor, daß die Aufnahme der Klappe für den Faltbehälter wannenförmig ist und der Faltbehälter entnehmbar ist. Dies ermöglicht im Ausklappzustand der Klappe den Faltbehälter zu entnehmen und statt dessen schmutzige Gegenstände, z.B. verdreckte und nasse Schuhe in der Wanne unterzubringen. Mit dieser Maßnahme werden Verschmutzungen des Verkehrsmittelinnenraums auf die wannenförmige Aufnahme begrenzt, so daß der Reinigungsaufwand minimiert werden kann.

Eine weitere vorteilhafte Ausgestaltung sieht vor, daß die Klappbehältereinrichtung einen an einer Karosserie des Verkehrsmittels befestigten Halterahmen aufweist, an welchem die Klappe gelenkig gelagert ist. Dies ermöglicht zum einen einen festen Halt der Klappe, da sie mit der stabilen Karosserie des Verkehrsmittels verbunden ist. Außerdem wird es durch eine solche Halterahmenkonstruktion möglich, eine im Wesentlichen vormontierte Klappbehältereinrichtung in einem Fertigungsschritt zu montieren, dies reduziert den Montageaufwand bzw. die Montagekosten des Verkehrsmittels.

Je nach Anwendungsbereich sind verschiedene Ausgestaltungen der Faltbox im Zusammenspiel mit der Klappe möglich:
- Eine schwenkbar mit dem Verkehrsmittel verbundene Klappe, mit entnehmbarer Faltbox ermöglicht den schnellen Weitertransport von Gütern nach Entnahme des Faltbehälters. Dies vereinfacht z.B. den Transport eingekaufter Lebensmittel in Kraftfahrzeugen. Außerdem ist es möglich, bei Verlust eines Faltbehälters kostengünstigen Ersatz, z.B. in Baumärkten, zu erwerben.
- Weiterhin ist es möglich, eine vom Fahrzeug nicht trennbare Klappe vorzusehen, mit welcher der Faltbehälter fest verbunden ist. Hierdurch wird sichergestellt, daß stets ein Faltbehälter im Kraftfahrzeug zur Beladung mit Frachtgut zur Verfügung steht. Hierbei kann der Materialeinsatz für die Klappbehältereinrichtung vermindert werden, wenn die Klappe den Boden des Faltbehälters bildet und keine gesonderte Bodenplatte vorgesehen werden muß.
- Schließlich ist es auch möglich, die Klappe trennbar vom Fahrzeug zu gestalten. Dies ermöglicht es, einerseits den oben erwähnten Vorteil des verminderten Materialeinsatzes zu nutzen und andererseits einen vereinfachten Weitertransport von Frachtgut, z.B. beim Einkaufen von Lebensmitteln mit einem Kleinbus, zu ermöglichen.

Eine besonders vorteilhafte Ausführungsform sieht vor, daß eine Drehachse zum Schwenken der Klappe aus dem Schließzustand in den Ausklappzustand vorgesehen ist, welche im wesentlichen in Fahrzeuglängsrichtung verläuft und die zweite Schwenkachse hierzu orthogonal ist. Das Merkmal der Orthogonalität ist hierbei zwar nicht zwingend. Es ist jedoch besonders günstig, in diesem Falle eine orthogonale zweite Drehachse vorzusehen, welche dann das erdbodenparallele Schwenken der Klappe mit in der Aufnahme der Klappe befindlichem Klappbehälter ermöglicht.

Eine weitere besonders vorteilhafte Ausführungsform sieht vor, daß die Aufnahme zur Fixierung bzw. zum Halten des Klappbehälters bezüglich einem Schwenkglied, welches ebenfalls zur Klappe gehört, translatorisch verschieblich geführt ist. Hierbei sind die Mittel zum Schwenken der Klappe in beide Schwenkrichtungen am Schwenkglied angebracht. Die translatorische Verschiebbarkeit der Aufnahme bzw. des Schwenkgliedes wird durch Schwalbenschwanzführungen, Stangenführungen oder dergleichen gewährleistet. Hierbei können diese Längsführungen mit einem Anschlag versehen werden, so daß lediglich ermöglicht wird, die Aufnahme zum Fahrzeugäußeren hin herauszuschieben, so daß kein Laderaum sich mehr unter der Aufnahme befindet. Es ist aber auch möglich, einen solchen Anschlag nicht vorzusehen, so daß die Aufnahme dann von der Klappe entfernbar ist und anschließend z.B. mit einem darunter angeordneten Fahrgestell weiter transportiert werden kann.

Weitere vorteilhafte Ausgestaltungen werden in den übrigen abhängigen Ansprüchen angegeben.

Die vorliegende Erfindung wird nun anhand mehrerer Figuren erläutert. Es zeigen:
- Fign. 1a bis 1c: unterschiedliche Bewegungszustände einer erfindungsgemäßen Klappbehältereinrichtung,
- Fign. 2a und 2b: Schnitte durch eine erfindungsgemäße Klappbehältereinrichtung,
- Fig. 3: eine Detailansicht einer weiteren Ausführungsform einer erfindungsgemäßen Klappe mit zwei Schwenkachsen.
- Fign. 4a bis 4c: Ansichten eines Fahrgestells zum Rolltransport eines Klappbehälters.

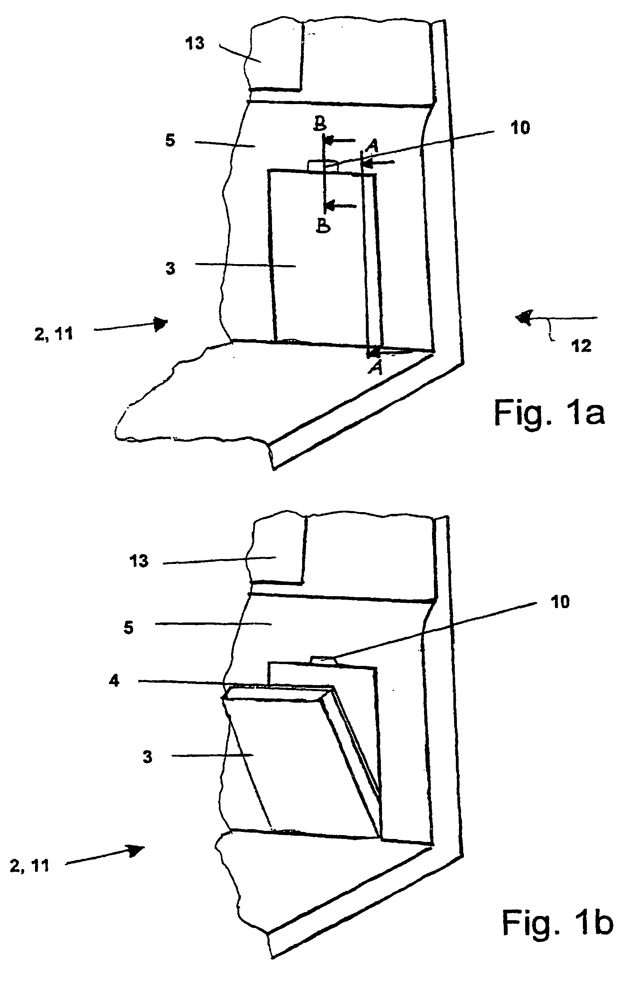

Fig. 1a zeigt einen Ausschnitt aus einem Heckabteil eines Kleinbusses (bzw. eines "Minivans"). Zu sehen sind eine hintere rechte Seitenscheibe 13, die Beladung des Kleinbusses erfolgt aus Richtung 12. Bündig mit der Innenraumverkleidung 5 des Kleinbusses schließt eine Klappe 3, welche sich in ihrem Schließzustand befindet. Der Innenraum 2 des Kleinbusses 11 zeigt im in Fig. 1a gezeigten Zustand kein Frachtgut, der Laderaum ist z.B. frei für zusätzliche Bestuhlung. Zum Herausklappen der Klappe 3 wird eine Bedienerhand in die Griffmulde 10 geführt, um die Klappe 3 zu hintergreifen und somit in den in Fig. 1b gezeigten Zustand zu schwenken.

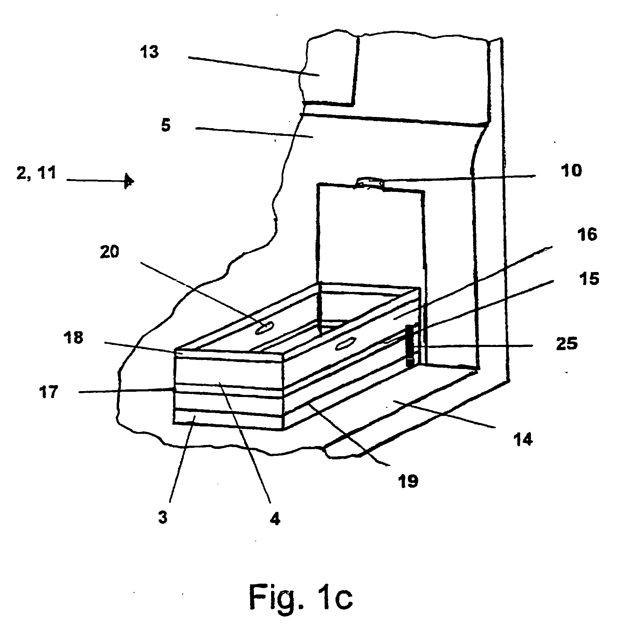

Fig. 1b zeigt das Heckabteil des Kleinbusses aus Fig. 1a mit teilweise herausgeschwenkter Klappe 3. Diese weist an ihrer im Schließzustand dem Innenraum des Kleinbusses abgewandten Seite eine Aufnahme 19 (siehe Fig. 1c) zur Stützung bzw. Fixierung eines zusammengefalteten Faltbehälters 4 auf. Diese Aufnahme kann wannenförmig ausgeführt sein, es ist aber auch möglich, daß sie durch Fixierelemente (etwa Dorne, etc.) realisiert ist.

Schließlich zeigt Fig. 1c die Klappe 3 in einem bezüglich Fig. 1a um etwa 90° in Richtung des Innenraums ausgeschwenkten Zustand (dem "Ausklappzustand"). Die Klappe 3 ist nun im Wesentlichen waagerecht angeordnet, d.h. parallel zu dem Boden 14 des Heckabteils des Kleinbusses 11. Der Faltbehälter 4, welcher in Fig. 1b in einem zusammengeklappten Zustand gezeigt ist, ist in Fig. 1c vollkommen ausgeklappt, so daß sich ein im Wesentlichen quaderförmiger Frachtraum ergibt, welcher von der Oberseite des Faltbehälters her zu beladen ist. Der Faltbehälter 4 weist an seinen Seitenwänden gelochte (Lochung ist aber nicht notwendig) Kunststoffplatten 16 auf, welche über scharnierartige Gelenke 15 miteinander verbunden sind. Im Bereich der Seitenkanten 17 sind seitlich benachbarte Platten 16 nicht fest miteinander verbunden, lediglich im Bereich der Oberkante 18 besteht eine umlaufende Verbindung. Die umlaufende Oberkante 18 ist ebenfalls über Scharniergelenke mit darunter liegenden gelochten Kunststoffplatten 16 verbunden, Gleiches gilt für den umlaufenden Rand der nicht sichtbaren Bodenplatte des Faltbehälters 4.

In die wannenförmige Aufnahme 19 ist der Klappbehälter 4 im Wesentlichen formschlüssig eingesetzt. Der ausgefaltete Faltbehälter 4 ist z.B. an Griffen 20 aus der wannenförmigen Klappe 3 herauszuheben. Die verbleibende waagerecht liegende Wanne kann somit als Stauraum, z.B. für verschmutzte Schuhe genutzt werden, so daß der übrige Innenraum des Kleinbusses nicht verschmutzt wird.

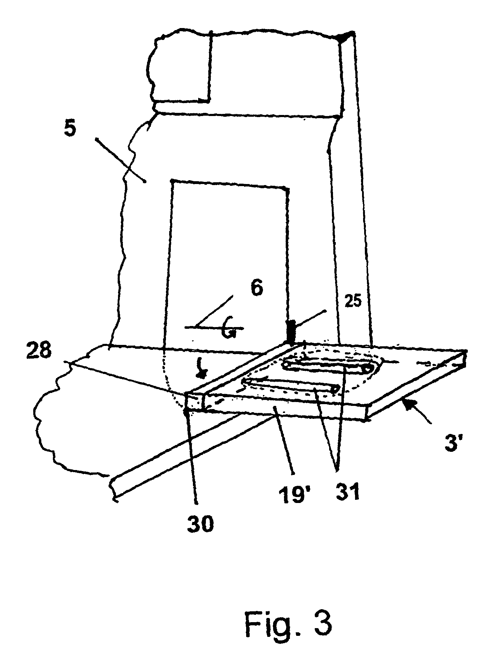

Die Klappe 3 ist außerdem um eine Drehachse 25, welche senkrecht zum Boden 14 des Laderaums des Kleinbusses 11 steht, schwenkbar. Dies ermöglicht das waagerechte Herausschwenken der Klappe 3 mit einem darin befindlichen ausgefalteten Faltbehälter 4. Auf diese Weise kann die Klappe 3 teilweise über den Außenrand des Bodens 14 des Kleinbusses 11 geschwenkt werden, so daß die Beladung bzw. die Entnahme des Faltbehälters sich für die Bedienperson einfacher gestaltet. Es ist möglich, eine Sperre vorzusehen, welche das Herausschwenken der Klappe 3 um die Achse 25 verhindert, so daß lediglich ein Herausschwenken im Sinne von Fig. 1b möglich ist. Auf weitere Einzelheiten des Herausschwenkens um Achse 25 wird bei der Beschreibung von Fig. 3 näher eingegangen.

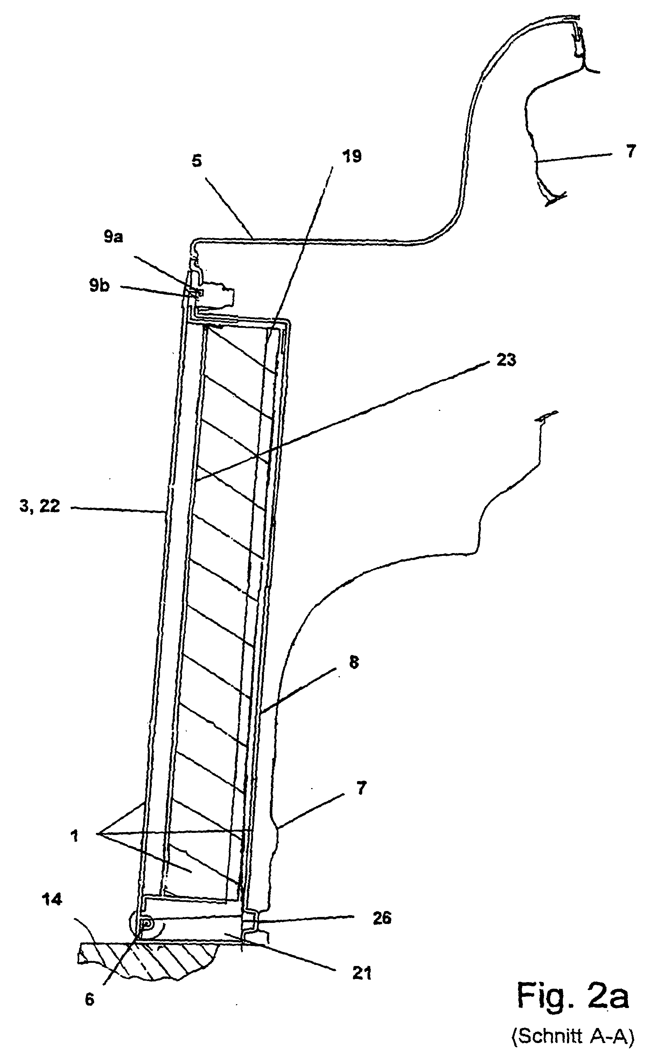

Fig. 2a zeigt einen Schnitt A-A durch die in Fig. 1a gezeigte Klappbehältereinrichtung 1. Es ist die Klappe 3 im Schließzustand dargestellt, d.h. in dem im Wesentlichen zur Innenraumverkleidung 5 des Kleinbusses 11 bündigen Stellung. Ein Halterahmen 8, welcher im Querschnitt im Wesentlichen U-förmig ausgeführt ist, liegt mit einem Schenkel des "U" im Wesentlichen auf dem Boden 14 auf. Außerdem ist der Halterahmen 8 an der Verbindungsstelle 26 mit der Karosserie 7 des Kleinbusses 11 verschraubt. Die Klappe 3 ist über eine Drehachse 6, welche in Stegen 21 des Halterahmens 8 fixiert ist, drehbar gelagert.

Die Klappe 3 besitzt eine zum Innenraum des Kleinbusses 11 abschließende äußere Wand 22 sowie eine innere Wand 23, welche im Wesentlichen U-förmig gestaltet ist und in welche der zusammengeklappte Faltbehälter 4 im Wesentlichen formschlüssig eingesetzt ist. Der schraffierte Bereich stellt hierbei den zusammengeklappten Faltbehälter 4 dar, die den schraffierten Bereich kreuzende Linie stellt die Oberkante des Randes 19 der Klappe 3 dar. Die Klappe 3 wird durch Verriegelungselemente 9a und 9b in ihrer in Fig. 2a bzw. Fig. 1a gezeigten Stellung gehalten. Hierzu ist an der Oberseite der Klappe 3 ein Haken 9a vorgesehen, dieser greift in eine Falle 9b des sich anschließenden Abschnittes der Innenraumverkleidung 5 ein. Der Haken 9a löst sich bei einer vorgegebenen an die Klappe 3 anzulegenden Zugkraft bzw. bei andersartiger Konstruktion einer Druckkraft aus der Falle 9b selbsttätig. Selbstverständlich ist es auch möglich, einen Hebelmechanismus vorzusehen, welcher bei Betätigung eines Hebel die Falle 9b für den Haken 9a freigibt.

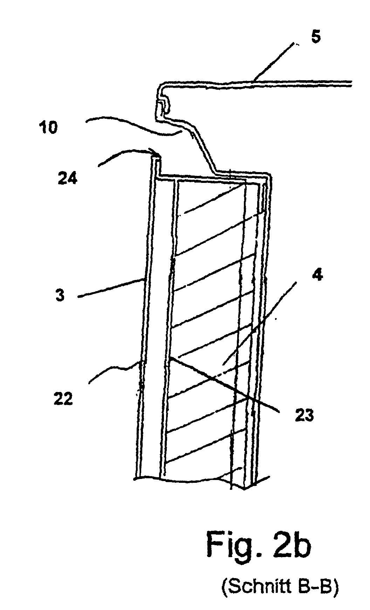

Schließlich zeigt Fig. 2b einen weiteren Schnitt aus Fig. 1a, den Schnitt B-B der Klappbehältereinrichtung 1. Dies ist ein Schnitt durch die Griffmulde 10. Diese sich im Halterahmen 8 befindliche Ausnehmung 10 ermöglicht ein Hintergreifen der Kante 24 der Klappe 3, so daß eine Bedienerhand durch Hintergreifen der Kante 24 die Klappe 3 auf die in Fig. 1b gezeigte Weise herausschwenken kann.

Die in den Figuren dargestellte Ausgestaltung der erfindungsgemäßen Klappbehältereinrichtung zeigt lediglich eine der in der Beschreibungseinleitung aufgezeigten Varianten. So ist es selbstverständlich möglich, die Klappe 3 als Boden des Faltbehälters 4 vorzusehen, so daß Klappe und Faltbehälter einen festen Verbund bilden. Bei einer solchen Ausgestaltung ist es auch möglich, die Klappe 3 entnehmbar mit dem Halterahmen 8 zu verbinden, so daß ein vereinfachter Weitertransport des Faltbehälters (mitsamt Klappe) möglich ist.

Fig. 3 zeigt eine Detailansicht einer weiteren Ausführungsform einer erfindungsgemäßen Klappe. Soweit bei der Beschreibung von Fig. 3 nichts anderes gesagt wird, gelten sämtliche Ausführungen, welche bei der Beschreibung der Fign. 1a bis 1c gemacht wurden. Die in Fig. 3 gezeigte Klappe 3' weist ein Schwenkglied 28 auf. Dieses Schwenkglied 28 weist Mittel zum Schwenken der Klappe in zwei Schwenkrichtungen auf. Zum einen ist die Klappe 3' um die Drehachse 25 des Fahrzeuges schwenkbar, so daß z.B. aus einer in Fig. 1c gezeigten Lage der Klappe ein Herausschwenken der Klappe 3' parallel zum Erdboden bzw. dem Ladeboden 14 möglich ist bis in die in Fig. 3 gezeigte Endlage. Im Bereich der Achse 25 können Rastmittel vorgesehen sein, um das Schwenkglied 28 in seiner in Fig. 3 gezeigten Stellung zu halten. Alternativ ist es auch möglich, das Schwenkglied sowie den Laderaumboden 14 mit komplementären Rastelementen 30 zu versehen, welche ebenfalls eine solche Fixierung des Schwenkgliedes 28 ermöglichen. Außerdem weist das Schwenkglied eine Drehachse auf, mit welcher das Schwenkglied um die in Fahrzeuglängsrichtung angeordnete Drehachse 6 drehbar ist. Bezüglich weiterer Einzelheiten hierzu wird auf die Beschreibung der Fign. 1a und 1b verwiesen. In Fig. 3 ist somit eine Klappbehältereinrichtung gezeigt, welche im Schließzustand auf der den Verkehrsmittelinnenraum abgewandten Seite der Klappe 3' eine Aufnahme für einen Klappbehälter aufweist. Die Klappe ist zum Schwenken der Klappe von einem mit der senkrechten Seitenwand des Fahrzeugs bündigen Zustand um die Achse 6 ausgeführte Schwenkbewegung in eine Lage schwenkbar, welche der in Fig. 1c gezeigten entspricht. Durch das Schwenken in eine zweite Schwenkrichtung (um die Achse 25 herum) ist ein anschließendes, im Wesentlichen erdbodenparalleles Schwenken der Klappe sogar mit auf der Aufnahme 19' liegendem Faltbehälter 4 möglich.

Die Klappe 3' ist so ausgeführt, daß die Aufnahme 19' bezüglich dem zu der Klappe 3' gehörenden Schwenkglied 28 translatorisch verschieblich geführt ist. Hierzu sind an dem Schwenkglied 28 Stangenelemente 31 befestigt, welche im Wesentlichen in Richtung 6 zeigen (Fig. 3 zeigt diese innerhalb der Aufnahme liegenden Stangen durch einen mit Strichlinie markierten Aufbruch). Die bei dieser Ausführungsform im Wesentlichen brettförmige Aufnahme weist zu diesen Stangenelementen 31 korrespondierende Bohrungen auf, in welchen die Stangenelemente 31 geführt sind. Somit ist es möglich, die im Wesentlichen brettförmig ausgeführte Aufnahme 19' translatorisch entlang der Fahrzeuglängsrichtung zu bewegen. Hiermit ist in jedem Fall möglich, die Aufnahme 19' soweit aus dem Fahrzeug herauszuschieben, daß lotrecht zu einem auf der Aufnahme 19' befindlichen Faltbehälter sich kein Laderaumboden 14 mehr befindet und somit eine Bedienperson, ohne sich über den Laderaumboden 14 zu beugen, den Faltbehälter greifen kann. Statt der Stangenelemente 31 können selbstverständlich auch andere Längsführungselemente, wie etwa Schwalbenschwanzführungen etc. vorgesehen sein.

Es empfiehlt sich, daß beim Aufschieben der Aufnahme 19' auf das Schwenkglied 28 das Schwenkglied in der in Fig. 3 gezeigten Position festgerastet ist (s.o.).

Hierdurch wird erreicht, daß beim Aufschieben der Aufnahme 19' kein unbeabsichtigtes Schwenken um die Hochachse 25 geschieht.

Je nach Ausführungsform kann unterhalb der brettförmigen Aufnahme 19' ein weiteres flächiges Bauteil angeordnet sein, welches im Schließzustand der Klappe den bündigen äußeren Abschluß zum übrigen Fahrzeuginnenraum bildet. Außerdem ist es möglich, daß hier nicht gezeigte Anschläge vorgesehen sind, welche dafür sorgen, daß die Aufnahme 19' nicht vollkommen von den Stangenelementen 31 gelöst werden kann. Diese Anschläge sind allerdings optional, in anderen Ausführungsformen ist es möglich, die Aufnahme 19' von den Stangenelementen 31 bzw. dem Schwenkglied 28 zu lösen.

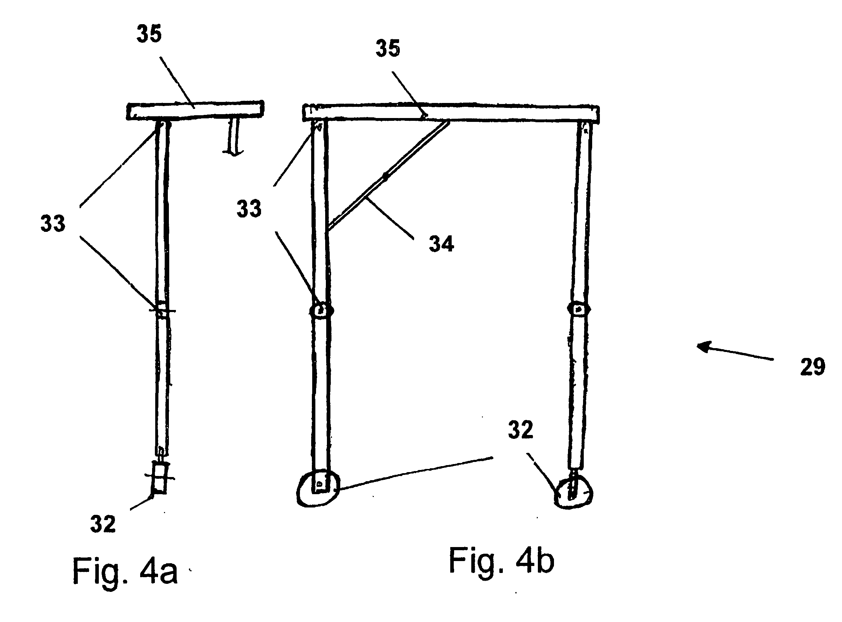

Fign. 4a bis 4c zeigen ein klappbares Fahrgestell, welches unterhalb der Aufnahme 19' in der in Fig. 3 gezeigten Lage verfahrbar ist, um somit die Aufnahme 19' mitsamt einem darauf bestimmten befindlichen Faltbehälter aus der in Fig. 3 gezeigten Lage wegzurollen. Das Fahrgestell 29 kann in zusammengeklapptem Zustand unterhalb der brettförmigen Aufnahme 19' in der in Fig. 3 gezeigten Stellung angebracht sein. Somit ist es dann möglich, daß im Schließzustand der Klappbehältereinrichtung das zusammengeklappte Fahrgestell 29 sich im Wesentlichen parallel zur Seitenwand der Innenraumverkleidung 5 befindet. Alternativ dazu ist es aber auch möglich, das Fahrgestell im zusammengeklappten Zustand an einer anderen Stelle zu lagern.

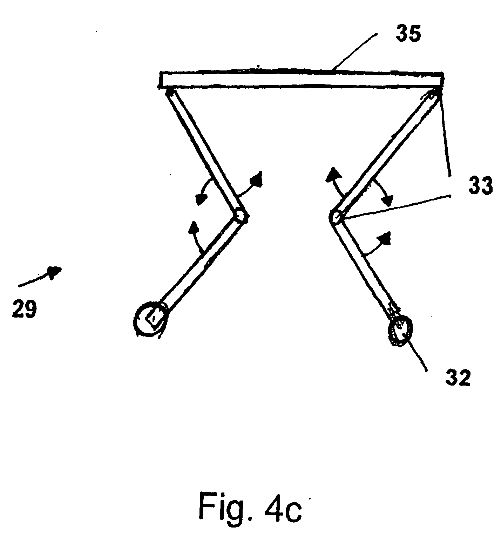

Im Folgenden wird das klappbare Fahrgestell kurz erläutert. Fig. 4a zeigt hierbei eine Vorderansicht des Fahrgestells im ausgeklappten Zustand, Fig. 4b eine Seitenansicht des Fahrgestells im ausgeklappten Zustand. Das Fahrgestell weist an seiner Oberseite eine im Wesentlichen rechteckförmige Platte 35 zur Auflage einer Aufnahme 19' bzw. eines Faltbehälters 4 auf. Unterhalb des Fahrgestells sind vier Beine mit jeweils zugeordneten Rollen 32 vorgesehen. Die Beine sind mit einklappbaren Stützstrebe 34 versehen und weisen jeweils zwei Gelenke 33 auf. Alle diese Drehgelenke weisen Endanschläge mit einer Arretierung für die in Fign. 4a und 4b gezeigte Stellung auf. Durch Einklappen der Beine des Fahrgestells in die in Fig. 4c mit Pfeilen gezeigten Richtungen ist es möglich, das Fahrgestell 29 zwecks Bauraumminimierung zusammenzuklappen. Im zusammengeklappten Zustand sind die Abmaße des Fahrgestelles nur geringfügig größer als die Abmaße der Platte 35.

Es ist möglich, auf das Fahrgestell 29 Faltbehälter aufzusetzen, welche mit einem klappbaren bzw. teleskopierbaren Griff versehen sind. Bei Fixierung des Faltbehälters auf der Platte 35 ist es dann möglich, das Fahrgestell mit aufgesetztem und mit Griff versehenen Faltbehälter quasi wie einen Einkaufswagen zu bewegen.

## Patentansprüche

1. Klappbehältereinrichtung (1) für Verkehrsmittel wie Kraftfahrzeuge, Eisenbahnen, Flugzeuge oder dergleichen, welche
eine im Verkehrsmittelinnenraum (2) gelagerte Klappe (3; 3') sowie einen Faltbehälter (4) umfaßt,
wobei für die Klappe ein im Wesentlichen zur Innenraumverkleidung (5) des Verkehrsmittels bündiger Schließzustand (Fig. 1a) sowie ein davon verschiedener Ausklappzustand (Fig. 1c) einnehmbar ist und
für den Faltbehälter (4) ein ausgefalteter Zustand (Fig. 1c) zur Beladung mit Frachtgut sowie ein zusammengefalteter Zustand (Fign. 1a, 1b) einnehmbar ist und auf der im Schließzustand dem Verkehrsmittelinnenraum abgewandten Seite der Klappe der zusammengefaltete Faltbehälter unterbringbar ist,
**dadurch gekennzeichnet,**
**daß** die im Schließzustand dem Verkehrsmittelinnenraum abgewandte Seite der Klappe (3; 3') eine Aufnahme (19; 19') für den Faltbehälter (4) aufweist und die Klappe zum Schwenken derselben in den Ausklappzustand und anschließendem, im Wesentlichen erdbodenparallelen Schwenken in zwei Schwenkrichtungen schwenkbar ist.

2. Klappbehältereinrichtung nach Anspruch 1, **dadurch gekennzeichnet, daß** die Aufnahme (19) wannenförmig ist und der Faltbehälter (4) aus der Aufnahme entnehmbar ist.

3. Klappbehältereinrichtung nach einem der vorhergehenden Ansprüche, **dadurch gekennzeichnet, daß** diese einen an einer Karosserie (7) des Verkehrsmittels befestigten Halterahmen (8) aufweist, an welchem die Klappe (3) gelenkig gelagert ist.

4. Klappbehältereinrichtung nach Anspruch 3, **dadurch gekennzeichnet, daß** die Klappe (3) aus dem Halterahmen (8) entnehmbar ist.

5. Klappbehältereinrichtung nach Anspruch 1, **dadurch gekennzeichnet, daß** die Klappe (3) fest mit dem Faltbehälter (4) verbunden ist.

6. Klappbehältereinrichtung nach einem der vorhergehenden Ansprüche, **dadurch gekennzeichnet, daß** eine erste Drehachse (6) zum Schwenken der Klappe (3) aus dem Schließzustand in den Ausklappzustand vorgesehen ist, welche im Wesentlichen in Fahrzeuglängsrichtung verläuft.

7. Klappbehältereinrichtung nach einem der vorhergehenden Ansprüche, **dadurch gekennzeichnet, daß** eine zu der ersten Drehachse (6) im Wesentlichen orthogonale zweite Drehachse (25) vorgesehen ist zum erdbodenparallelen Schwenken der Klappe mit auf der Aufnahme (19, 19') angeordnetem Faltbehälter (4).

8. Klappbehältereinrichtung nach einem der vorhergehenden Ansprüche, **dadurch gekennzeichnet, daß** die Aufnahme (19') bezüglich einem zu der Klappe (3') gehörenden Schwenkglied (28), welches Mittel zum Schwenken der Klappe in beide Schwenkrichtungen aufweist, translatorisch verschieblich geführt ist.

9. Klappbehältereinrichtung nach einem der vorhergehenden Ansprüche, **dadurch gekennzeichnet, daß** diese ein zusammenklappbares Fahrgestell (29) zum Rolltransport des Faltbehälters (4) umfaßt.

10. Klappbehältereinrichtung nach einem der vorhergehenden Ansprüche, **dadurch gekennzeichnet, daß** das Verkehrsmittel ein Kleinbus (11) ist und die Klappbehältereinrichtung im Heckabteil des Kleinbusses im Schließzustand im Wesentlichen senkrecht untergebracht ist.

## Claims

1. Collapsible container device (1) for transport vehicles such as motor vehicles, trains, planes or suchlike, which incorporates a flap (3; 3') as well as a folding container (4) within the internal transport vehicle cabin (2), whereby the flap can be positioned in a closed condition (Fig. 1a) that is substantially flush with the internal chamber trim (5) of the transport vehicle as well as in an open condition (Fig. 1c) that is different from the first,
and for which an unfolded condition (Fig. 1c) of the folding container (4) for loading with freight goods as well as a folded position (Figs. 1a, 1b) is available, and whereby the folding container can be positioned upon the side that faces away from the internal transport vehicle chamber of the flap in the closed condition,
**characterised in that** the side of the flap (3; 3') that faces away from the internal transport vehicle chamber in its closed condition incorporates a take-up (19; 19') for the folding container (4), and **in that** the flap can be swivelled in the unfolded condition and in the subsequent position substantially parallel with the floor for swivelling of the same in two swivel directions.

2. Collapsible container device according to Claim 1, **characterised in that** the take-up (19) is sump-shaped and **in that** the folding container (4) can be removed from the take-up.

3. Collapsible container device according to one of the preceding Claims, **characterised in that** the same incorporates a holding frame (8) affixed to the chassis (7) of the transport vehicle, onto which the flap (3) is bearingly affixed via a joint.

4. Collapsible container device according to Claim 3, **characterised in that** the flap (3) can be removed from the holding frame (8).

5. Collapsible container device according to Claim 1, **characterised in that** the flap (3) is fixedly connected with the folding container (4).

6. Collapsible container device according to one of the preceding Claims, **characterised in that** a first axis of rotation (6) is envisaged for the swivelling of the flap (3) from the closed condition into the open condition, which extends substantially along the longitudinal direction of the vehicle.

7. Collapsible container device according to one of the preceding Claims, **characterised in that** a second axis of rotation (25) positioned substantially orthogonal to the first axis of rotation (6) is envisaged, for the swivelling of the flap together with the folding container (4) positioned within the take-up (19, 19') parallel with the floor.

8. Collapsible container device according to one of the preceding Claims, **characterised in that** the take-up (19') is held translationally displaceable in relation to a swivel joint (28) associated with the flap (3'), which incorporates means for the swivelling of the flap in both swivel directions.

9. Collapsible container device according to one of the preceding Claims, **characterised in that** the same incorporates a collapsible transport frame (29) for the rolling transport of the folding container (4).

10. Collapsible container device according to one of the preceding Claims, **characterised in that** the transport vehicle is a minibus (11), and **in that** the collapsible container device is substantially vertically positioned within the rear section of the minibus in its closed condition.

## Revendications

1. Dispositif à récipient pliable (1) pour un moyen de transport tel que des véhicules automobiles, des trains, des avions ou similaires, lequel dispositif comprend un abattant (3 ; 3') logé dans un espace interne (2) du moyen de transport, ainsi qu'un récipient pliant (4),
dans lequel l'abattant peut se trouver dans un état fermé (Figure 1a) sensiblement en affleurement avec le revêtement (5) de l'espace interne du moyen de transport et dans un état basculé (Figure 1c) différent, et
dans lequel le récipient pliant (4) peut se trouver dans un état déplié (Figure 1c) en vue de charger des marchandises, et dans un état replié sur lui-même (Figures 1a, 1b), et le récipient pliant replié peut être logé sur la face de l'abattant à l'état fermé, opposée à l'espace interne du moyen de transport,
**caractérisé en ce que**
la face de l'abattant (3 ; 3') à l'état fermé opposée à l'espace interne du moyen de transport comprend un logement (19 ; 19') pour le récipient pliant (4), et l'abattant est orientable dans deux directions pivotantes pour être pivoté dans l'état basculé et pour être ultérieurement pivoté de manière sensiblement parallèle au sol.

2. Dispositif à récipient pliable selon la revendication 1, **caractérisé en ce que** le logement (19) est en forme de cuve, et **en ce que** le récipient pliant (4) peut être extrait du logement.

3. Dispositif à récipient pliable selon une des revendications précédentes, **caractérisé en ce que** celui-ci comprend un cadre de support (8) fixé sur une carrosserie (7) du moyen de transport, contre laquelle est articulé l'abattant (3).

4. Dispositif à récipient pliable selon la revendication 3, **caractérisé en ce que** l'abattant (3) peut être extrait du cadre de support (8).

5. Dispositif à récipient pliable selon la revendication 1, **caractérisé en ce que** l'abattant (3) est relié de façon fixe au récipient pliant (4).

6. Dispositif à récipient pliable selon une des revendications précédentes, **caractérisé en ce qu'**un premier axe de pivot (6) est prévu pour le pivotement de l'abattant (3) de l'état fermé à l'état basculé, lequel s'étend essentiellement dans le sens longitudinal du véhicule.

7. Dispositif à récipient pliable selon une des revendications précédentes, **caractérisé en ce qu'**un second axe de pivot (25) essentiellement orthogonal au premier axe de pivot (6) est prévu pour que l'abattant pivote parallèlement au sol avec le récipient pliant (4) disposé sur le logement (19 ; 19').

8. Dispositif à récipient pliable selon une des revendications précédentes, **caractérisé en ce que** le logement (19'), en ce qui concerne un élément de pivotement (28), appartenant à l'abattant (3'), qui comprend des moyens de pivotement de l'abattant dans deux directions de pivotement, est déplaçable en translation.

9. Dispositif à récipient pliable selon une des revendications précédentes, **caractérisé en ce que** celui-ci comprend un chariot (29) pliable sur lui-même pour le transport roulant du récipient pliant (4).

10. Dispositif à récipient pliable selon une des revendications précédentes, **caractérisé en ce que** le moyen de transport est un petit autocar (11) et **en ce que** le dispositif à récipient pliable est logé, à l'état fermé, essentiellement perpendiculairement dans la partie arrière du petit autocar.
